# EUROPEAN PATENT SPECIFICATION

(11) **EP 2 136 895 B1**
(45) Date of publication and mention of the grant of the patent: **11.05.2011**
(21) Application number: 07723427.6
(22) Date of filing: 20.03.2007
(51) Int. Cl.: B01D 9/00, C02F 1/22

(54) **CRYSTALLIZER WITH INTERNAL SCRAPED COOLED WALL AND METHOD OF USE THEREOF**
KRISTALLISATOR MIT GESCHABTER GEKÜHLTER INNENWAND UND VERFAHREN ZU SEINER VERWENDUNG
CRISTALLISEUR À PAROI INTERNE RACLÉE ET REFROIDIE ET PROCÉDÉ D'UTILISATION DE CELUI-CI

(43) Date of publication of application: 30.12.2009
(73) Proprietor: Technische Universiteit Delft, 2628 CN Delft (NL)
(72) Inventor: EVERS, J., A., NL-3721 CG Bilthoven (NL); van Spronsen, Johannes, 2201 VW Noordwijk (NL); Genceli Güner, Fatma Elif, 2628 VE Delft (NL); Rodriguez Pascual, Marcos, 3112 SE Schiedam (NL); Witkamp, Geert-Jan, 2661 TV Bergschenhoek (NL)
(74) Representative: Hatzmann, Martin
(86) International application number: PCT/EP2007/002463
(87) International publication number: WO 2008/113386

(56) References cited:
- EP-A- 1 094 047
- WO-A-2006/013228
- FR-A- 2 103 803
- GB-A- 949 161
- US-A- 5 423 288

## Description

The present invention relates to the field of crystallizers for liquids, e.g. containing an amount of solvable materials. Solids, viz. ice and salts, can be separated from the main solution by the difference in density and/or particle size. An apparatus for processing the recovery of crystallized material from aqueous solutions is known from EP 1230194.

Further crystallizers for removing crystals from a liquor is known e.g. from US-A-5,102,544, US-A-3,501,924, US-A-3,283,522, and US-A-3,344,616. US-A-5423288 discloses a crystallizer with a scraped cooled wall

It is an object of the present invention to improve upon known crystallizers.

According to the present invention an apparatus is disclosed as recited in claim 1.

The apparatus according to the present invention provides for a more accurate operation thereof because of the relatively large scraped cooled surface, creating a relatively high heat transfer.

Because the scraped wall portions are spaced from the outer wall, heat-loss is minimized, while the outer wall can have very low heat conductivity, e.g. double walled or otherwise.

Because of the features of the apparatus according to the present invention, the present invention also provides for a more accurate method, e.g. within 0.5°C or preferably 0.1°C of the eutectic temperature of the solution.

According to a further preferred embodiment of the present invention, the apparatus comprises a number of modular parts, which can be arranged on top of each other, and which each preferably comprise the cooled wall portions and lines for cooling fluid, as well as a shaft with scrapers, which can be connected to a shaft attending from the electric motor in the top part.

In a preferred embodiment of the present invention, the apparatus is provided with one, preferably two sets of annular rings. In an alternative embodiment, however, it could very well be equipped with any number of such sets of annular rings, whichever is the optimal number.

According to a preferred embodiment, the cooling fluid transported in and out from the cooling elements by a helical line. It will, however, be conceivable for one skilled in the art that the cooling fluid can be transported in and out of the space defined by the cooling services without lines or tubes, while the inner space of the cooling element can also be equipped with guiding means for the cooling fluid.

The apparatus according to the present invention can be used for numerous applications, such as mineral salts, mineral acids, organic acids, amino acids, pharmaceutical drugs and other salts including MgSO₄, HNO₃ and CA(NO₃)₂.

Further details, features and advantages of the present invention will become clear when reading the following description, in which reference is made to the following figures, showing:
Figure 1 a side view of a preferred embodiment of an apparatus according to the present invention;
Figure 2 a sectional view of the embodiment shown in Figure 1;
Figure 3 a sectional view of the embodiment shown in Figures 1 and 2; and
Figure 4 a more detailed sectional view of the embodiment shown in Figures 1, 2 and 3.

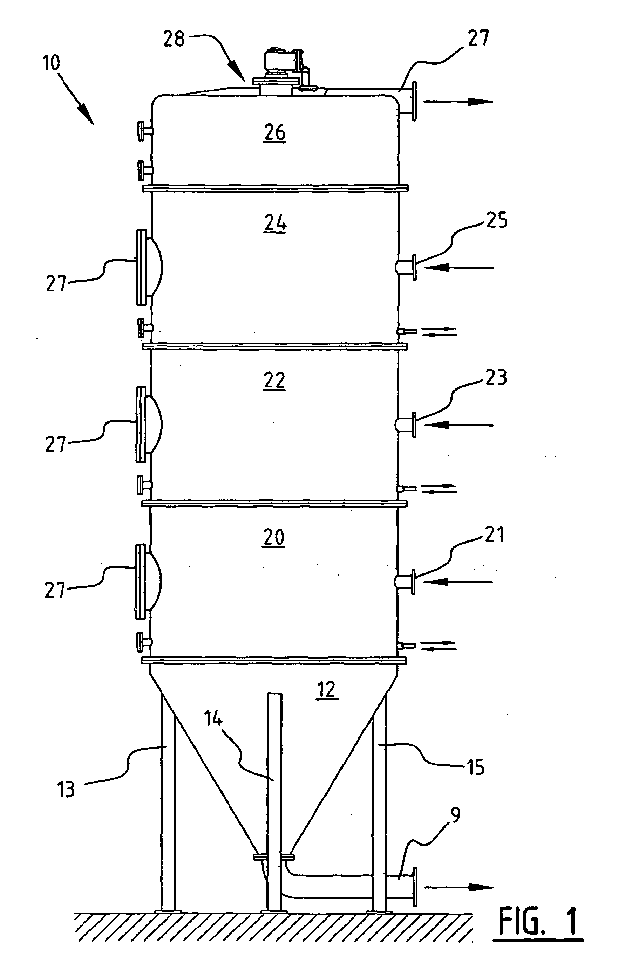

A preferred embodiment 10 of the apparatus according to the present invention (Figure 1) comprises a lower hopper 12 which is supported by a steel construction comprising legs 13, 14 and 15, as well as intermediate modular parts 20, 22, 24 as well as a top part 26.

Each of the modules 20, 22, 24 is provided with an inlet 21, 23, 25 for introducing a mixture or solution into the interior of the modules, of which interiors are in open connection with the interiors of the modules below and above. Each of the intermediate modules is also provided with a manhole 27 for inspection and reparation thereof.

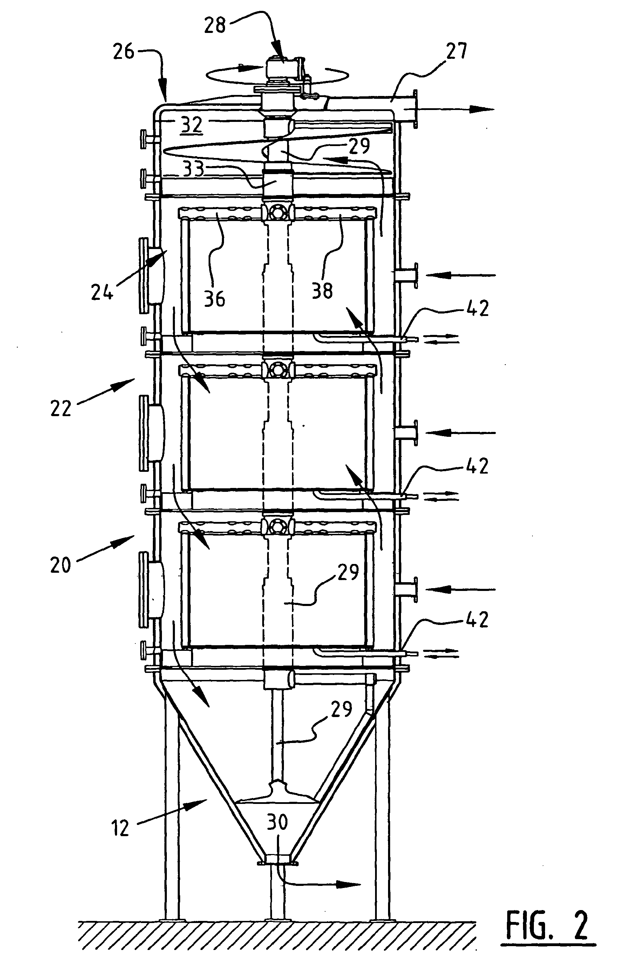

The top part 26 is provided with an discharge 27 for discharging ice crystals. The top part 26 includes a variable speed electric motor 28 (see also Figure 2), driving a central shaft 29 extending through the module to a scraper 30 in the lower part 12. In the top part, the electric motor also drives a propeller 2 to press the ice crystal through the discharge 27. A clutch mechanism 33 is provided for driving the propeller 32.

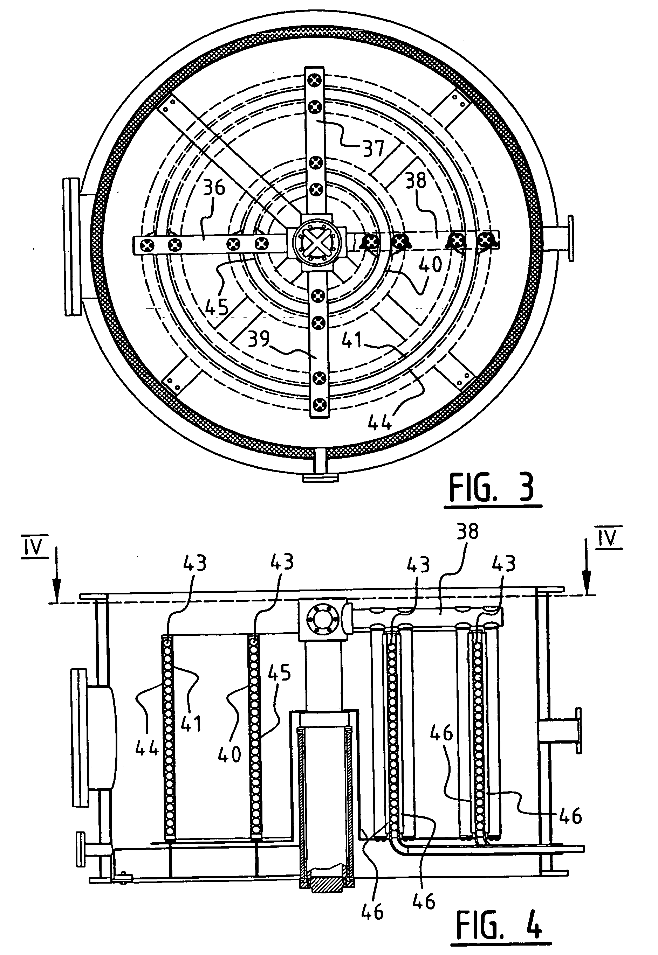

Also referring to Figures 3 and 4, each of the intermediate modules 20, 22, 24 is provided with arms 36, 37, 38, 39 coupled to the central shaft 29 for supporting scrapers 46 to scrape ice from two cylindrical walls 40, 45 and 41, 44. Each of the intermediate modules is provided with a connection 42 for cooling fluid for flowing in and out of helical line 43 which are provided in annular spaces between walls 40, 45 and 41, 44. When the arms 36-39 are rotated, the scrapers scrape along walls 40, 45 and 41, 44 to scrape of salt and/or ice crystals, so that the solidified water or ice moves upwardly and the concentrated salt crystals slurry is discharged through discharge 9.

The above described apparatus can easily be used for recover of crystallized material including MgSO₄ from aqueous solutions. Of course, it will also be possible to use it for salts, such as HNO₃ or Ca(NO₃)₂. The overall temperature of the solution can be e.g. within 2.0°C, preferably 0.5°C or 0.1°C of the eutectic point of such medium, e.g. around -12°C for MgSO₄. The overall height of the apparatus can be a 1-10 metres.

## Claims

1. Apparatus for separating salts from an aqueous mixture or solution, comprising:
- an outer wall provided with an inlet(21, 23, 25) for the said mixture or solution and provided with a first discharge (27) for discharging an ice slurry and a second discharge (9) for discharging a salt slurry;
- cooled wall portions (40, 41, 44, 45) which can be cooled at or close to a temperature where the mixture or solution solidifies, which cooled wall portions (40, 41, 44, 45) are distanced from the outer wall, the cooled wall portions (40, 41, 44, 45) and the outer wall being cylindrical and coaxial and wherein the cooled wall portions (40, 41, 44, 45) form annular rings, said apparatus being adapted to have the aqueous mixture or solution from the inlet circulate in the space formed between the cooled wall portions and the outer wall and
- one or more raking or scraping elements (30) for scraping solidified material from the said cooled wall portions (40, 41, 44, 45).

2. Apparatus according to claim 1, wherein a second discharge (27) is arranged in a lower hopper part (12) of the apparatus.

3. Apparatus according to any of claims 1 or 2, comprising two or more modular parts which can be arranged on top of each other and which includes the outer wall, scraping elements (30) and cooled wall portions (40, 41, 44, 45).

4. Apparatus according to any of claims 1-3, provided with two annular spaces which are arranged concentrically, each annular space being provided with cooling fluid and in between which annular spaces the scraping elements (30) are rotated to scrape the ice and/or salt from the cylindrical walls facing to each other.

5. Apparatus according to any of claims 1-4, provided with an electric motor for driving the scraping elements (30).

6. Apparatus according to claim 5, provided with a clutch provided between the electric motor (28) and a shaft (29) for driving the scraping elements (30).

7. A method for using an apparatus according to any of claims 1-6, wherein the cooled wall portions are kept within 2.0°C, preferably 0.5°C or more preferably within a range of 0.1°C of the eutectic freezing point of the said aqueous mixture or solution.

8. A method according to claim 7, wherein the mixture comprises an aqueous solution including MgSO₄.

## Patentansprüche

1. Vorrichtung zur Abtrennung von Salzen aus einer wässrigen Mischung oder Lösung, umfassend:
eine Außenwand, die mit einem Einlass (21, 23, 25) für die Mischung oder Lösung und mit einem ersten Ablass (27) zum Ablassen von Eisschlamm und mit einem zweiten Ablass (9) zum Ablassen von Salzschlamm versehen ist;
gekühlte Wandbereiche (40, 41, 44, 45), die bis zu oder nahe bis zu einer Temperatur gekühlt werden können, bei der die Mischung oder Lösung erstarrt, wobei die gekühlten Wandbereiche (40, 41, 44, 45) von der Außenwand beabstandet sind,
die gekühlten Wandbereiche (40, 41, 44, 45) und die Außenwand sind zylindrisch und koaxial ausgebildet und die gekühlten Wandbereiche (40, 41, 44, 45) bilden ringförmige Ringe,
wobei die Vorrichtung für eine Zirkulation der am Einlass bereitgestellten wässrigen Lösung oder Mischung in dem zwischen den gekühlten Wandbereichen und der Außenwand geformten Raum ausgebildet ist und
mit einem oder mehreren Rechen- oder Schabeelementen (30) zum Abschaben von erstarrtem Material von den gekühlten Wandbereichen (40, 41, 44, 45).

2. Vorrichtung nach Anspruch 1, wobei ein zweiter Ablass (27) an einem unteren Ablauftrichter (12) der Vorrichtung angebracht ist.

3. Vorrichtung nach Anspruch 1 oder 2, umfassend zwei oder mehrere modulare Teile, die aufeinander angeordnet werden können und die die Außenwand, die Schabeelemente (30) und die gekühlten Wandbereiche (40, 41, 44, 45) umfassen.

4. Vorrichtung nach einem der Ansprüche 1 bis 3, ausgestattet mit zwei konzentrisch angeordneten ringförmigen Räumen, wobei jeder der ringförmigen Räume mit Kühlflüssigkeit versehen ist und wobei zwischen den ringförmigen Räumen die Schabeelemente (30) rotiert werden, um das Eis und/oder das Salz von den sich gegenüberliegenden zylindrischen Wänden abzuschaben.

5. Vorrichtung nach einem der Ansprüche 1 bis 4, ausgestattet mit einem elektrischen Motor zum Antrieb der Schabeelemente (30).

6. Vorrichtung nach Anspruch 5, ausgestattet mit einer Kupplung, die zwischen dem elektrischen Motor (28) und einer Welle (29) zum Antrieb der Schabeelemente (30) angeordnet ist.

7. Verfahren zur Nutzung einer Vorrichtung nach einem der Ansprüche 1 bis 6, wobei die gekühlten Wandbereiche innerhalb eines Bereichs von 2 Grad Celsius, vorzugsweise 0,5 Grad Celsius, besonders bevorzugt 0,1 Grad Celsius, um den eutektischen Gefrierpunkt der wässrigen Mischung oder Lösung gehalten werden.

8. Verfahren nach Anspruch 7, wobei die Mischung eine wässrige Lösung umfasst, die MgSO4 enthält.

## Revendications

1. Dispositif pour séparer des sels à partir d'un mélange aqueux ou d'une solution aqueuse, comprenant :
- une paroi extérieure, munie d'une entrée (21, 23, 25) pour ledit mélange ou solution et munie d'une première décharge (27) pour décharger une boue de glace et d'une deuxième décharge (9) pour décharger une boue de sels ;
- des parties de parois (40, 41, 44, 45) refroidies, pouvant être refroidie à une température égale ou proche de la température à laquelle le mélange ou la solution se solidifie, lesdites parties de parois (40, 41, 44, 45) refroidies étant espacées de la paroi extérieure, les parties de parois (40, 41, 44, 45) refroidies et la paroi extérieure étant cylindriques et coaxiales, dans lequel les parties de parois (40, 41, 44, 45) refroidies forment des cerceaux annulaires, ledit dispositif étant adapté pour que le mélange aqueux ou la solution aqueuse provenant de l'entrée circule dans l'espace formé entre les parties de parois refroidies et la paroi extérieure, et
- un ou plusieurs éléments de raclage ou grattage (30), pour enlever par grattage le matériau solidifié desdites parties de parois (40, 41, 44, 45) refroidies.

2. Dispositif selon la revendication 1, dans lequel une deuxième décharge (27) est agencée dans une partie formant trémie inférieure (12) du dispositif.

3. Dispositif selon l'une quelconque des revendications 1 ou 2, comprenant deux parties modulaires ou plus, pouvant être agencées en partie supérieure de chaque autre et comprenant la paroi extérieure, des éléments de grattage (30) et des parties de parois (40, 41, 44, 45) refroidies.

4. Dispositif selon l'une quelconque des revendications 1 à 3, muni de deux espaces annulaires agencés concentriquement, chaque espace annulaire étant muni de fluide de refroidissement et les éléments de grattage (30) étant mis en rotation entre lesdits espaces annulaires, pour enlever par grattage la glace et/ le sel des parois cylindriques se faisant face les unes les autres.

5. Dispositif selon l'une quelconque des revendications 1 à 4, équipé d'un moteur électrique, pour entraîner les éléments de grattage (30).

6. Dispositif selon la revendication 5, équipé d'un embrayage prévu entre le moteur électrique (28) et un arbre (29) pour entraîner les éléments de grattage (30).

7. Procédé pour utiliser un dispositif selon l'une quelconque des revendications 1 à 6, dans lequel les parties de paroi refroidies sont maintenues dans une fourchette de 2,0°C, de préférence de 0,4°C, ou, de manière mieux préférée dans une fourchette de 0,1 °C du point de congélation eutectique dudit mélange aqueux ou de ladite solutions aqueuse.

8. Procédé selon la revendication 7, dans lequel le mélange comprend une solution aqueuse incluant du MusO4.
